# EUROPEAN PATENT SPECIFICATION

(11) **EP 4 478 901 B1**
(45) Date of publication and mention of the grant of the patent: **14.01.2026**
(21) Application number: 23700912.1
(22) Date of filing: 17.01.2023
(51) Int. Cl.: A23N 15/00, A23N 4/12

(54) **A SYSTEM AND A METHOD FOR REMOVING AT LEAST ONE PART FROM A VEGETABLE PIECE**
EINE VORRICHTUNG UND VERFAHREN ZUR ENTFERNUNG VON ZUMINDEST EINEM TEIL EINES GEMÜSES
UN SYSTEME ET UN PROCEDE POUR L'EXTRACTION D'AU MOINS UNE PARTIE D'UN LÉGUME

(30) Priority: 16.02.2022 NL 2030959
(43) Date of publication of application: 25.12.2024
(73) Proprietor: Sormac B.V., 5916 PN Venlo (NL)
(72) Inventor: HAFFMANS, Hubertus Ernest Ferdinand Marie, 5916 PN VENLO (NL)
(74) Representative: Algemeen Octrooi- en Merkenbureau B.V.
(86) International application number: PCT/NL2023/050013
(87) International publication number: WO 2023/158299

(56) References cited:
- EP-A1- 1 759 600
- EP-A1- 2 404 511
- WO-A1-91/07883
- WO-A2-2004/030475
- NL-C2- 2 006 274
- US-A- 4 168 642

## Description

The invention relates to a system for removing at least one part from a vegetable piece.

The invention further relates to a method for removing at least one part from a vegetable piece. The part to be removed from the vegetable piece is for example a core of a leaf vegetable with a head of leaves, such as iceberg lettuce or cabbage or similar vegetables.

The known systems and/or methods for removing at least one part from a vegetable piece comprise a transport mechanism and a removal mechanism arranged above the transport mechanism. The vegetable pieces are positioned on the transport mechanism with the part to be removed facing the removal mechanism. The part to be removed may be aligned manually by an operator with respect to the removal mechanism. By means of the transport mechanism the vegetable pieces are transported in the transport direction to a removal position below the removal mechanism. In this removal position a removal operation is performed by means of the removal mechanism such that the part is being removed from the vegetable piece. After the removal operation, the vegetable piece without the part is transported by means of the transport mechanism for further processing. A drawback of the known system/method is that the removed part has to be lifted upwards to be removed from the product flow. This upwards removal is from a constructional point of view relatively complex and often results that the cut part or pieces of the cut part fall back on the transport mechanism between the vegetable pieces such that the quality of the vegetable pieces to be further processed is reduced in an undesired manner. Further, the part to be removed may be at a desired height or depth in the vegetable piece, which makes the removal operation from above difficult in the known system/method as the height of the vegetable pieces to be processed normally varies such that relatively complex additional measures may be required such as measuring the height of the vegetable piece and controlling the removal depth or height. These additional measures result in a relatively complex system/process, which also increase the risk of system failure reducing the system capacity. Known systems for removing at least one part from a vegetable piece, and methods of their use, are described in e.g. WO 2004/030475 A2, EP 2 404 511 A1, WO 91/07883 A1 and EP 1 759 600 A1

It is an object of the present invention to provide an improved system for removing at least one part from a vegetable piece, which preferably further at least partly obviates one or more of above-described drawbacks. In a further aspect, it is an object to provide a system with a relatively high productive capacity for removing in a relatively accurate manner the part(s) of the vegetable pieces. In yet a further aspect, it is an object to provide a system for removing part(s) of vegetable pieces with an improved quality of the vegetable pieces being processed by the removal mechanism and/or with a relatively simple construction with a relatively low risk of system failure.

At least one of these objects is achieved with a system as defined in claim 1.

The system for removing at least one part from a vegetable piece, such as for example a core of iceberg lettuce or cabbage, comprises:
- a transport mechanism including a plurality of vegetable support positions, each vegetable support position comprises at least one opening, wherein the vegetable support positions of the transport mechanism can be moved in a transport direction;
- a removal mechanism arranged below the transport mechanism,
- at least one imaging device arranged below the transport mechanism, wherein the imaging device is orientated to at least one opening which is upstream of the removal mechanism seen in the transport direction;
- at least one display configured for communicating with the at least one imaging device for displaying the at least one opening registered by the at least one imaging device, wherein by means of the display the at least one part to be removed from the vegetable piece is alignable with respect to the opening of the vegetable support position for a subsequent removal operation by means of the removal mechanism.

By means of such a system, a part to be removed from the vegetable piece by the removal mechanism can be detected/registered by means of an imaging device, i.e. a camera, through the opening of each vegetable support position of the transport mechanism. By registering, for example in real time, the part of the vegetable piece, it is possible to align the part to be removed by using a display prior to a removal operation. In other words, the imaging device and the display make it possible to manually change the position of the part of the vegetable piece with respect to the opening such that in a subsequent step in the system the part can be removed by means of the removal mechanism in a relatively accurately manner without having to compromise on the productive capacity of the system, i.e. the productive capacity of the system of this disclosure is relatively high. The system has for example a productive capacity of removing at least 1500 parts per hour, preferably at least 2000 parts per hour. The system is further improved in that the removal mechanism is arranged below the transport mechanism, such that after the removal operation the removed part will fall under the influence of gravity from the transport mechanism without the risk that the part or pieces of the part fall back on the transport mechanism in the product flow of processed vegetable pieces. Thus, the arrangement of the removal mechanism below the transport mechanism increases the quality of the processed vegetable pieces on the transport mechanism. A further advantage of the system of this disclosure is that for the removal operation by means of the removal mechanism, the side of the vegetable piece with the part to be removed is positioned on the vegetable support position. Hence, independent of the height of the vegetable piece, the part can be removed more accurately and consistently by means of the removal mechanism, for example at a more consistent height or consistent depth in the vegetable piece, without requiring additional measures such as measuring the height of the vegetable piece and/or controlling the removal depth or distance of the removal mechanism. As a result of the arrangement of the removal mechanism below the transport mechanism and/or the relatively consistent position of the part to be removed on the vegetable support position independent of the height of the vegetable piece, a relatively simple system can be provided from a constructional point of view and/or with minimal risk of system failure. By means of the display the at least one part to be removed from the vegetable piece may be manually alignable with respect to the center of the opening of the vegetable support position. Using an indicator such as the center of the opening may facilitate the manual alignment process for removing the part(s) in a relatively accurate and/or fast manner. In the system configuration disclosed herein, an operator is normally not able to inspect a vegetable piece through an opening of the support position or at least not in an easy manner, such that it is difficult perhaps even impossible to verify whether the part of the vegetable piece is aligned in a correct manner for the removal operation of the removal mechanism. So, the display provides the footage (images or video) in a user friendly and/or in an ergonomic manner to the operator. Hence, by using the display, it becomes possible to manually align the part of the vegetable piece in a relatively fast and convenient manner without compromising productive capacity. In one aspect, the display is configured for displaying a virtual centering tool, for example a virtual sight. Such a virtual centering tool facilitates manually aligning the part to be removed with respect to the desired removal position in a relatively fast manner. The virtual centering tool can be represented in the display in a first viewing mode, for example a red coloured sight and/or a sight displayed in a steady manner, indicating that the part is not correctly aligned with respect to the opening for the subsequent removal operation, and in a second viewing mode, for example a green coloured sight view and/or a sight displayed in a flashing manner, indicating that the part is correctly aligned with respect to the opening for the subsequent removal operation. The display may also comprise a processor configured for displaying a mirror image of a recording of the imaging device on the display. It has been demonstrated by experiments that by displaying a mirror image (including a video), it becomes easier and more intuitive for an operator to manually correctly align the part to be removed in a relatively fast manner.

Advantageous other aspects/features are further defined in the dependent claims and will be discussed in more detail below.

It is also an object of this disclosure to provide an improved method for removing at least one part from a vegetable piece. In a further aspect, the method preferably further at least partly obviates one or more of above-described drawbacks of the prior art and/or provides the same or corresponding advantages as described above for the system.

At least one of the objects mentioned in this disclosure is achieved by the method as defined in the independent method claim.

The method for removing at least one part from a vegetable piece, such as for example a core of iceberg lettuce or cabbage, comprises at least the following steps:
- transporting the vegetable piece(s) in a transport direction by means of a transport mechanism including a plurality of vegetable support positions, each vegetable support position comprises at least one opening;
- removing the at least one part from the vegetable piece by means of a removal mechanism which is arranged below the transport mechanism,
- registering by means of at least one imaging device from below the transport mechanism at least one opening of at least one of the plurality of vegetable support positions, wherein the at least one opening to be registered by the at least one imaging device is upstream of the removal mechanism seen in the transport direction;
- using at least one display communicating with the at least one imaging device and displaying the at least one opening of the at least one of the plurality of vegetable support positions, wherein by means of the display the at least one part to be removed from the vegetable piece is aligned with respect to the opening for a subsequent removal operation by means of the removal mechanism.

The advantages of the method are already disclosed with respect to the system of this disclosure and are not repeated here for brevity reasons. Like the system, the at least one display may be used by an operator for manually aligning the at least one part to be removed from the vegetable piece with respect to the center of the opening of the vegetable support position. The center of the opening may facilitate the alignment process for removing the part(s) in a relatively accurate and/or fast manner. By means of the display an operator is able to see the part to be removed for manually aligning the part to be removed with respect to the opening, such that in a subsequent removal operation the aligned part can be removed by means of the removal mechanism. As discussed above, a virtual centering tool and/or a mirror image of the recording of the imaging device may be used in the method to facilitate the manual alignment process for an operator. In a further aspect, the settings and/or equipment for removing a part from a certain type of vegetable can be automatically adapted by means of an interface. For example, by operator selection on the interface between a first type of vegetable piece, i.e. first modus of the system, such as for example iceberg lettuce and a second type of vegetable piece, i.e. second modus of the system, such as for example cabbage. The interface may also provide more selections dependent on the number of vegetable piece types that can be processed with the system or the method of this disclosure. So, by means of the interface the operation modus of the system can be changed for processing a different type of vegetable, with the result that the equipment such as the removal units of the removal mechanism can be automatically exchanged or settings may be automatically adapted such as the transporting speed of the transport mechanism.

The aspects described above as well as other aspects of the system or the method will be explained hereunder on the basis of exemplary embodiment in combination with a figure. The invention is not, however, limited to the exemplary embodiments described hereunder. Rather, a number of adaptations and modifications are possible, which also make use of the idea of the invention claimed in the claims and consequently fall within the scope of protection. In particular, the possibility is mentioned of combining the features/aspects that are only mentioned in the description and/or are shown in the figure, with the features of the claims in so far as compatible.

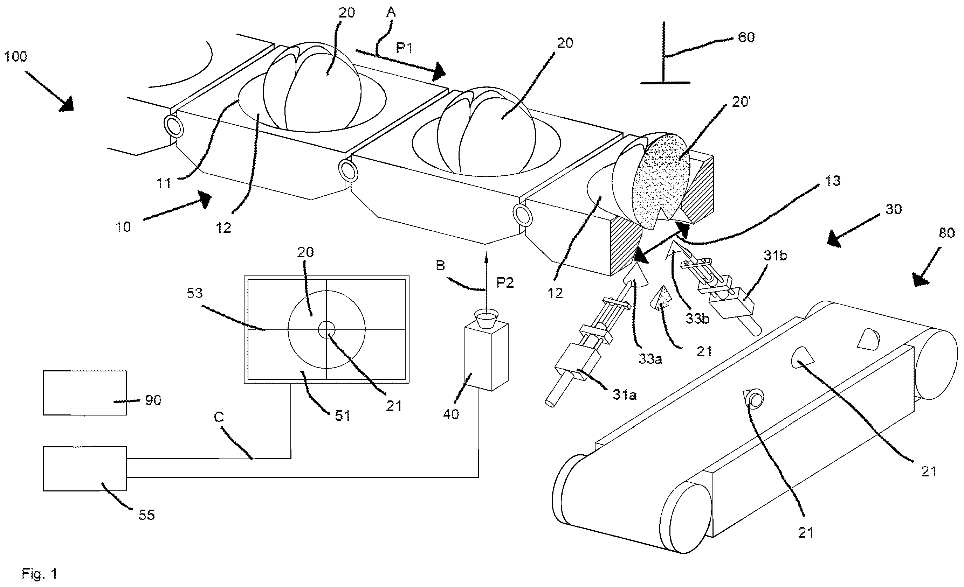

Figure 1 shows a diagrammatic view of the system and the method steps according to the present disclosure. The method steps are identified with capital letters in figure 1.

The system 100 for removing at least one part 21 from a vegetable piece 20, such as iceberg lettuce 20 as shown in figure 1, comprises a transport mechanism 10 including a plurality of vegetable support positions 11 which can be moved in a transport direction P1 of the transport mechanism 10. The system 100 may also be used for other types of leaf vegetables than iceberg lettuce 20. For example, the system 100 may be used for other lettuces or similar leaf vegetables such as for example cabbage. The system/method of this disclosure is in general suitable for removing a part of vegetable piece having a smaller cross section surface area than the rest of the vegetable piece.

Each vegetable support position 11 comprises at least one opening 13 for viewing from below the transport mechanism a vegetable piece 20 supported by the vegetable support position 11. In the embodiment shown in figure 1, each vegetable support position 11 is provided by a vegetable support tray 11, wherein the vegetable support trays are connected (as shown in figure 1) to each other in the transport mechanism 10. Other configurations of the transport mechanism 10 than the conveyor shown are possible, such as for example a carousel transport mechanism (not shown), wherein the transport direction has an at least partially rotational direction.

In the vegetable support tray the opening 13 is provided by a through recess 13. The vegetable support position 11 shown in figure 1 further comprises a support 12, i.e. a frustoconical support surface, adapted for supporting and holding the vegetable piece 20. Lower edges of the support 12 are the upper edges of the through recess 13 which as shown in figure 1 may also have a frustoconical shape. Other embodiments (not shown) for a vegetable support position with at least one opening for viewing from below the transport mechanism a vegetable piece supported by the vegetable support position are possible. In fact, more than one (viewing) opening for each vegetable support position are also possible (not shown) in each vegetable support position 11.

The system 100 further comprises a removal mechanism 30 arranged below the transport mechanism 10 for the vegetable pieces. The opening 13 may be used by the removal mechanism 30 to remove the part 21 (lettuce core) of the vegetable piece 20 (iceberg lettuce). Hence, in the embodiment shown the opening 13 is configured to be used for removing and viewing the vegetable piece 20. The removal mechanism 30 comprises at least one cutter 31a, 31b configured to move from a first position (shown in figure 1) to a second removing position (not shown in figure 1) to remove the core 21. Seen in a vertical direction the second position (not shown) is higher than the first position (shown in figure 1) of the cutters 31a, 31b. The upper portions 33a, 33b of the cutters 31a, 31b are located in the opening 13 in the second position, i.e. the upper portions 33a, 33b of the cutters 31a, 31b are located in the through recess in the second position (not shown in figure 1). Figure 1 shows two cutters 31a, 31b, but three or more cutters 31a, 31b for removing a part are also possible. Instead of the cutters 31a,31b shown, the removal mechanism 30 may also comprise a drill-like construction or a punch-like construction, wherein the drill (not shown) or punch knife (not shown) may also move from a first position to a second position to remove the part as described above.

In the second position of the cutters 31a,31b shown, the upper portions 33a, 33b of the cutters 31a, 31b together form a conical cutting blade for removing the core, wherein in the first position each upper portions 33a, 33b forms a section half of the conical cutting blade. The cutters 31a, 31b are driveable by an actuator from the first position to the second position and vice versa. The cutters 31a, 31b are arranged at an acute angle with respect to each other, the acute angle normally lies between 20-70 degrees. The removal mechanism 30 shown in figure 1 and described in this paragraph provides excellent cutting results, in particular for removing a core of iceberg lettuce 20 by means of the conical cutting blade provided by the two upper portions 33a, 33b which are moved to and from each other under the acute angle.

The system 100 further comprises at least one imaging device 40 arranged below the transport mechanism 10, wherein the imaging device 40 is orientated to at least one opening (indicated with arrow P2) which is upstream of the removal mechanism 30 seen in the transport direction P1. In other words, the camera is oriented to an opening 13 which is moving in the transport direction towards a position above the removal mechanism 30, preferably the travel time of the recorded opening to the position above the removal mechanism 30 is such that operations can be performed, for example on the vegetable piece 20. The imaging device 40 may be a still picture camera or video camera.

The system 100 further comprises at least one display 51, wherein by means of the display 51 the core to be removed from the vegetable piece 20 is manually alignable with respect to the opening 13 of the vegetable support position 11 for a subsequent (downstream) removal operation by means of the removal mechanism 30. The camera 40 makes it possible to change the position of the part 21 of the vegetable piece 20 with respect to the opening 13 such that in a subsequent step in the system 100 the part can be removed by means of the removal mechanism 30 in a relatively accurately manner with relatively high productive capacity. As shown in figure 1, the removed part 21 will fall under the influence of gravity from the transport mechanism 10 without the risk that the part or pieces of the part fall back on the transport mechanism 10 in the product flow of processed vegetable pieces. Further, figure 1 shows that the side of the vegetable piece 20 with the part 21 to be removed is positioned on the vegetable support position 11, i.e. "upside down" with respect to vegetable pieces in conventional systems disclosed in this disclosure. This "upside down" orientation provides that the part can be removed accurately and at a relatively consistent depth by means of the removal mechanism 30, without requiring additional measures such as measuring the height of the vegetable piece. The removal depth of the removal mechanism 30 may be adjusted between batches of vegetable pieces 20, for example by means of an interface to be discussed below. In a different embodiment of the system 100, it is further possible to adapt the removal depth of the removal mechanism 30 for each vegetable piece based on input of the imaging device 40, such as at least one visible dimension of the part to be removed. In particular, for core removal of iceberg lettuce, there is a correlation between the visible diameter of the core and its depth in the iceberg lettuce. Hence, the diameter of the core may be determined by the camera 40 and by means of image analysis using for example the processor 55 as a controller of the removal mechanism 30, the core can be removed more accurately by, for example, adjusting the height setting of the core removal unit 30 on the basis of the diameter of the core observed by the camera. In this manner, the core can be removed more accurately and, on the other hand, less lettuce is unnecessarily removed as waste.

Figure 1 shows the display 51 for displaying the at least one opening 13 registered by the camera 40, wherein the display 51 is arranged in such a manner that the display 51 can easily be used by an operator to manually align the part 21 of the vegetable piece with respect to the opening 13 for a subsequent removal operation by the removal mechanism 30. The part 21 of the vegetable being removed is aligned manually with respect to the opening 13, in particular the center of the opening 13. The display 51 comprises a processor 55. The center of the opening 13 is displayed in the display 51 by means of a cross-shaped sight 53, wherein the center of the cross-shaped sight 53 represents the center of the opening 13, i.e. the preferred position of the part 21 for the subsequent removal operation. The processor 55 is configured for displaying a virtual centering tool in the display such as sight 53. The processor 55 is visualized as an separate entity of the display in figure 1, but the processor 55 may also form a single structural unit with the display 51. The line between processor 55 and display 51 is indicated with C representing a method step manual alignment to be discussed below. Optionally, the processor 55 is configured for displaying a mirror image of a recording of the camera 40 on the display 51 as discussed above.

The or another display(s) 51 can also be used for monitoring the manual alignment process by an operator, for example by an supervisor.

The system 100 further comprises an interface 90 for adapting equipment and/or settings of the system for processing various types of vegetable pieces with the system, such as iceberg lettuce or cabbage. By operator selection on the interface 90 an operator may change the settings or equipment of the system 100, for example between a first modus of the system for processing a first vegetable piece such as iceberg lettuce and a second modus of the system for processing a second vegetable piece such as cabbage. By selecting the second mode on the interface if the system is in the first mode, the equipment such as for example the removal units of the removal mechanism 30 can be exchanged and/or settings may be adapted such as the transporting speed of the transport mechanism 10 or the depth of the part to be removed as discussed above. In figure 1 the interface 90 is not connected to other components shown, but the interface 90 may be connected in at least a communicating manner with the components of the system 100 as disclosed herein and as shown in figure 1 to adapt the equipment/settings of the system 100 or the equipment of the system.

The method of this disclosure is also visualized in figure 1, in particular the following method steps are indicated by capital letters A-C in figure 1:
- Step A transporting the vegetable piece(s) in a transport direction P1 by means of a transport mechanism 10 including vegetable support positions 11, each vegetable support position 11 comprises at least one opening 13;
- Step B registering by means of the camera 40 from below the transport mechanism 40 at least one opening 13 of at least one of the plurality of vegetable support positions 11, wherein the at least one opening 13 to be registered by the at least one imaging device 40 is upstream of the removal mechanism 30 seen in the transport direction P1;
- Step C using at least one display 51 communicating with the at least one imaging device 40, wherein by means of the display 51 the at least one part 21 to be removed from the vegetable piece 20 is shown in the display for manually aligning the part with respect to the opening 21 for a subsequent removal operation by means of the removal mechanism 30 which is arranged below the transport mechanism 10.

The vegetable piece(s) 20 can be transported in a continuous manner in the transport direction P1 by means of a transport mechanism 10 shown in figure 1. The removal mechanism may be configured to move together with the vegetable support position 11 in the transport direction P1 for performing the removal operation in a continuous transport mode of the transport mechanism 10. Alternatively, an intermittent transport in the transport direction P1 by means of a transport mechanism 10 is also possible. The virtual centering tool can be represented in the display 51 in a first viewing mode, for example a red coloured sight and/or a sight displayed in a steady manner, indicating that the part is not correctly aligned with respect to the opening for the subsequent removal operation, and in a second viewing mode, for example a green coloured sight view and/or a sight displayed in a flashing manner, indicating that the part is correctly aligned with respect to the opening for the subsequent removal operation. In a system with intermittent transport, the quality of the removal operation may be further increased in that the transport mechanism 10 is configured to start the transport when the display 51 is in the second viewing mode, i.e. transport is automatically started after correctly aligning the part of the vegetable piece.

The system 100 may further comprise at least one retaining unit 60 for holding the aligned vegetable 20 in place on the vegetable support position 11 during activation of the removal mechanism 30. In this manner, it can be guaranteed that the vegetable piece does not move during the removal operation of the removal mechanism 30 which may result in an incorrect removal process.

Instead of the retainer unit 60, the support (not shown) of each vegetable support position 11 may be configured to clamp or hold a vegetable piece in each vegetable support position for holding the aligned vegetable 20 in place on the vegetable support position 11 during activation of the removal mechanism 30.

The system 100 further comprises a mechanism 80 configured for receiving removed parts 21 of vegetable pieces 20' falling under influence of gravity and for transporting the received parts 21 of the vegetable pieces for further processing. Further processing includes using the parts in a different apparatus or system, for example for preparing animal feed, but also includes waste processing. The mechanism 80 may have different configurations than shown in figure 1. For example, a vacuum transport apparatus (not shown) may be used instead of the shown mechanism 80.

## Claims

1. A system for removing at least one part from a vegetable piece, such as for example a core of iceberg lettuce or cabbage, the system comprises:
- a transport mechanism including a plurality of vegetable support positions, each vegetable support position comprises at least one opening, wherein the vegetable support positions of the transport mechanism can be moved in a transport direction;
- a removal mechanism arranged below the transport mechanism, **characterised in that** it further comprises:
- at least one imaging device arranged below the transport mechanism, wherein the imaging device is orientated to at least one opening which is upstream of the removal mechanism seen in the transport direction;
- at least one display configured for communicating with the at least one imaging device for displaying the at least one opening registered by the at least one imaging device, wherein by means of the display the at least one part to be removed from the vegetable piece is alignable with respect to the opening of the vegetable support position for a subsequent removal operation by means of the removal mechanism.

2. The system according to claim 1, wherein the at least one part to be removed from the vegetable piece is alignable with respect to the center of the opening of the vegetable support position.

3. The system according to claim 1 or 2, wherein the display is configured for displaying a virtual centering tool.

4. The system according to any of the preceding claims, wherein the display comprises a processor configured for displaying a mirror image of a recording of the imaging device on the display.

5. The system according to any of the preceding claims, wherein the system further comprises at least one retaining unit for holding the aligned vegetable piece in place on the vegetable support position during activation of the removal mechanism.

6. The system according to any of the preceding claims, wherein the vegetable support position comprises a support adapted for supporting the vegetable piece and/or configured to clamp or hold the vegetable piece in each vegetable support position.

7. The system according to any of the preceding claims, wherein the removal mechanism comprises at least one cutter configured to move from a first position to a second position to remove the at least one part from the vegetable piece supported by the vegetable support position, preferably seen in a vertical direction the second position is higher than the first position of the at least one cutter, preferably in the second position at least an upper portion of the at least one cutter is located in the opening.

8. The system according to any of the preceding claims, wherein the system further comprises a mechanism configured for receiving removed parts of vegetable pieces falling under influence of gravity and for transporting the received parts of the vegetable pieces for further processing.

9. The system according to any of the preceding claims, wherein each vegetable support position is provided by a vegetable support tray, wherein the vegetable support trays are connected to each other in the transport mechanism.

10. The system according to any of the preceding claims, wherein the system comprises an interface for adapting equipment and/or settings of the system for various types of vegetable pieces, such as a first modus of the system, for example for processing iceberg lettuce, and a second modus of the system, for example for processing cabbage.

11. A method for removing at least one part from a vegetable piece, such as for example a core of iceberg lettuce or cabbage, the method comprises at least the following steps:
- transporting the vegetable piece(s) in a transport direction by means of a transport mechanism including a plurality of vegetable support positions, each vegetable support position comprises at least one opening;
- removing the at least one part from the vegetable piece by means of a removal mechanism which is arranged below the transport mechanism, **characterised in that** it further comprises the following steps:
- registering by means of at least one imaging device from below the transport mechanism at least one opening of at least one of the plurality of vegetable support positions, wherein the at least one opening to be registered by the at least one imaging device is upstream of the removal mechanism seen in the transport direction;
- using at least one display communicating with the at least one imaging device and displaying the at least one opening of the at least one of the plurality of vegetable support positions, wherein by means of the display the at least one part to be removed from the vegetable piece is aligned with respect to the opening for a subsequent removal operation by means of the removal mechanism.

12. The method according to claim 11, wherein the at least one part to be removed from the vegetable piece is aligned with respect to the center of the opening of the vegetable support position.

13. The method according to claim 11 or 12, wherein by means of the display an operator is able to manually align the at least one part to be removed from the vegetable piece with respect to the opening, such that in a subsequent removal operation the aligned part can be removed by means of the removal mechanism.

14. The method according to claim 11, 12 or 13, wherein a mirror image of a recording of the imaging device is displayed on the display.

15. The method according to any preceding claim 11-15, wherein for various types of vegetable pieces the settings and/or equipment for removing a part from the vegetable piece are automatically adapted by means of an interface, for example by operator selection on the interface between a first type of vegetable piece such as for example iceberg lettuce and a second type of vegetable piece such as for example cabbage.

## Patentansprüche

1. System zum Entfernen mindestens eines Teils von einem Gemüsestück, wie zum Beispiel eines Strunks von Eisbergsalat oder Kohl, wobei das System Folgendes umfasst:
- einen Transportmechanismus, der eine Vielzahl von Gemüsestützpositionen aufweist, wobei jede Gemüsestützposition mindestens eine Öffnung umfasst, wobei die Gemüsestützpositionen des Transportmechanismus in einer Transportrichtung bewegt werden können,
- einen Entfernungsmechanismus, der unter dem Transportmechanismus angeordnet ist, **dadurch gekennzeichnet, dass** es ferner Folgendes umfasst:
- mindestens eine Bildgebungsvorrichtung, die unter dem Transportmechanismus angeordnet ist, wobei die Bildgebungsvorrichtung auf mindestens eine Öffnung ausgerichtet ist, die in Transportrichtung gesehen stromaufwärts von dem Entfernungsmechanismus liegt,
- mindestens eine Anzeige, die zur Kommunikation mit der mindestens einen Bildgebungsvorrichtung zur Anzeige der mindestens einen von der mindestens einen Bildgebungsvorrichtung registrierten Öffnung ausgestaltet ist, wobei der mindestens eine von dem Gemüsestück zu entfernende Teil mittels der Anzeige für einen nachfolgenden Entfernungsvorgang mittels des Entfernungsmechanismus bezüglich der Öffnung der Gemüsestützposition ausrichtbar ist.

2. System nach Anspruch 1, wobei der mindestens eine von dem Gemüsestück zu entfernende Teil in Bezug auf die Mitte der Öffnung der Gemüsestützposition ausrichtbar ist.

3. System nach Anspruch 1 oder 2, wobei die Anzeige zum Anzeigen eines virtuellen Zentrierwerkzeugs ausgestaltet ist.

4. System nach einem der vorhergehenden Ansprüche, wobei die Anzeige einen Prozessor umfasst, der zum Anzeigen eines Spiegelbilds einer Aufzeichnung der Bildgebungsvorrichtung auf der Anzeige ausgestaltet ist.

5. System nach einem der vorhergehenden Ansprüche, wobei das System ferner mindestens eine Halteeinheit zum Halten des ausgerichteten Gemüsestücks an der Gemüsestützposition während der Aktivierung des Entfernungsmechanismus umfasst.

6. System nach einem der vorhergehenden Ansprüche, wobei die Gemüsestützposition eine Stütze umfasst, die zum Stützen des Gemüsestücks ausgeführt ist und/oder dazu ausgestaltet ist, das Gemüsestück in jeder Gemüsestützposition zu klemmen oder zu halten.

7. System nach einem der vorhergehenden Ansprüche, wobei der Entfernungsmechanismus mindestens eine Schneidvorrichtung umfasst, die dazu ausgestaltet ist, sich von einer ersten Position in eine zweite Position zu bewegen, um den mindestens einen Teil von dem von der Gemüsestützposition getragenen Gemüsestück zu entfernen, wobei die zweite Position vorzugsweise in einer vertikalen Richtung gesehen höher als die erste Position der mindestens einen Schneidvorrichtung liegt, wobei vorzugsweise mindestens ein oberer Abschnitt der mindestens einen Schneidvorrichtung in der zweiten Position in der Öffnung angeordnet ist.

8. System nach einem der vorhergehenden Ansprüche, wobei das System ferner einen Mechanismus umfasst, der zur Aufnahme entfernter Teile von Gemüsestücken, die unter Einfluss der Schwerkraft herabfallen, und zum Transportieren der aufgenommenen Teile der Gemüsestücke zur Weiterverarbeitung ausgestaltet ist.

9. System nach einem der vorhergehenden Ansprüche, wobei jede Gemüsestützposition durch eine Gemüsestützschale bereitgestellt wird, wobei die Gemüsestützschalen in dem Transportmechanismus miteinander verbunden sind.

10. System nach einem der vorhergehenden Ansprüche, wobei das System eine Schnittstelle zum Anpassen von Ausrüstung und/oder Einstellungen des Systems für verschiedene Arten von Gemüsestücken umfasst, wie etwa einen ersten Modus des Systems, zum Beispiel zum Verarbeiten von Eisbergsalat, und einen zweiten Modus des Systems, zum Beispiel zum Verarbeiten von Kohl.

11. Verfahren zum Entfernen mindestens eines Teils von einem Gemüsestück, wie zum Beispiel eines Strunks von Eisbergsalat oder Kohl, wobei das Verfahren mindestens die folgenden Schritte umfasst:
- Transportieren des Gemüsestücks oder der Gemüsestücke in einer Transportrichtung mittels eines Transportmechanismus, der eine Vielzahl von Gemüsestützpositionen aufweist, wobei jede Gemüsestützposition mindestens eine Öffnung umfasst,
- Entfernen des mindestens einen Teils von dem Gemüsestück mittels eines Entfernungsmechanismus, der unter dem Transportmechanismus angeordnet ist, **dadurch gekennzeichnet, dass** es ferner die folgenden Schritte umfasst:
- Registrieren mindestens einer Öffnung mindestens einer der Vielzahl von Gemüsestützpositionen mittels mindestens einer Bildgebungsvorrichtung von unterhalb des Transportmechanismus, wobei die mindestens eine von der mindestens einen Bildgebungsvorrichtung zu registrierende Öffnung in Transportrichtung gesehen stromaufwärts des Entfernungsmechanismus liegt,
- Verwendung mindestens einer Anzeige, die mit der mindestens einen Bildgebungsvorrichtung kommuniziert und die mindestens eine Öffnung der mindestens einen der Vielzahl von Gemüsestützpositionen anzeigt, wobei der mindestens eine von dem Gemüsestück zu entfernende Teil mittels der Anzeige für einen nachfolgenden Entfernungsvorgang mittels des Entfernungsmechanismus bezüglich der Öffnung ausgerichtet wird.

12. Verfahren nach Anspruch 11, wobei der mindestens eine von dem Gemüsestück zu entfernende Teil in Bezug auf die Mitte der Öffnung der Gemüsestützposition ausgerichtet wird.

13. Verfahren nach Anspruch 11 oder 12, wobei eine Bedienungsperson mittels der Anzeige in der Lage ist, den mindestens einen von dem Gemüsestück zu entfernenden Teil manuell bezüglich der Öffnung auszurichten, so dass der ausgerichtete Teil in einem nachfolgenden Entfernungsvorgang mittels des Entfernungsmechanismus entfernt werden kann.

14. Verfahren nach Anspruch 11, 12 oder 13, wobei ein Spiegelbild einer Aufzeichnung der Bildgebungsvorrichtung auf der Anzeige angezeigt wird.

15. Verfahren nach einem der vorhergehenden Ansprüche 11 - 15, wobei für verschiedene Arten von Gemüsestücken die Einstellungen und/oder Einrichtungen zum Entfernen eines Teils aus dem Gemüsestück automatisch mittels einer Schnittstelle angepasst werden, beispielsweise indem die Bedienperson an der Schnittstelle zwischen einer ersten Gemüsestückart wie beispielsweise Eisbergsalat und einer zweiten Gemüsestückart wie beispielsweise Kohl wählt.

## Revendications

1. Système de retrait d'au moins une partie d'un morceau de légume, tel que par exemple le cœur d'une laitue iceberg ou d'un chou, le système comprend :
- un mécanisme de transport comprenant une pluralité de positions de support de légume, chaque position de support de légume comprend au moins une ouverture, où les positions de support de légume du mécanisme de transport peuvent être déplacées dans une direction de transport ;
- un mécanisme de retrait agencé en dessous du mécanisme de transport,
**caractérisé en ce qu'**il comprend en outre :
- au moins un dispositif d'imagerie agencé en dessous du mécanisme de transport,
dans lequel le dispositif d'imagerie est orienté vers au moins une ouverture qui se trouve en amont du mécanisme de retrait vu dans la direction de transport ;
- au moins un dispositif d'affichage configuré pour communiquer avec l'au moins un dispositif d'imagerie pour afficher l'au moins une ouverture enregistrée par l'au moins un dispositif d'imagerie, où, au moyen du dispositif d'affichage, l'au moins une partie à retirer du morceau de légume peut être alignée par rapport à l'ouverture de la position de support de légume pour une opération de retrait ultérieure au moyen du mécanisme de retrait.

2. Système selon la revendication 1, dans lequel l'au moins une partie à retirer du morceau de légume peut être alignée par rapport au centre de l'ouverture de la position de support de légume.

3. Système selon la revendication 1 ou 2, dans lequel le dispositif d'affichage est configuré pour afficher un outil de centrage virtuel.

4. Système selon l'une des revendications précédentes, dans lequel le dispositif d'affichage comprend un processeur configuré pour afficher une image miroir d'un enregistrement du dispositif d'imagerie sur le dispositif d'affichage.

5. Système selon l'une des revendications précédentes, dans lequel le système comprend en outre au moins une unité de retenue pour maintenir le morceau de légume aligné en place sur la position de support de légume pendant l'activation du mécanisme de retrait.

6. Système selon l'une des revendications précédentes, dans lequel la position de support de légume comprend un support adapté pour supporter le morceau de légume et/ou configuré pour serrer ou maintenir le morceau de légume dans chaque position de support de légume.

7. Système selon l'une des revendications précédentes, dans lequel le mécanisme de retrait comprend au moins un dispositif de coupe configuré pour se déplacer d'une première position à une seconde position pour retirer l'au moins une partie du morceau de légume supporté par la position de support de légume, de préférence vue dans une direction verticale, la seconde position est plus haute que la première position de l'au moins un dispositif de coupe, de préférence dans la seconde position, au moins une partie supérieure de l'au moins un dispositif de coupe est située dans l'ouverture.

8. Système selon l'une des revendications précédentes, dans lequel le système comprend en outre un mécanisme configuré pour recevoir les parties retirées des morceaux de légumes tombant par effet de gravité et pour transporter les parties reçues des morceaux de légumes pour un traitement supplémentaire.

9. Système selon l'une des revendications précédentes, dans lequel chaque position de support de légume est fournie par un plateau de support de légume, où les plateaux de support de légume sont reliés entre eux dans le mécanisme de transport.

10. Système selon l'une des revendications précédentes, dans lequel le système comprend une interface pour adapter l'équipement et/ou les réglages du système pour divers types de morceaux de légumes, tels qu'un premier mode du système, par exemple pour traiter de la laitue iceberg, et un second mode du système, par exemple pour traiter du chou.

11. Procédé de retrait d'au moins une partie d'un morceau de légume, tel que par exemple le cœur d'une laitue iceberg ou d'un chou, le procédé comprend au moins les étapes suivantes :
- de transport du/des morceau(x) de légume(s) dans une direction de transport au moyen d'un mécanisme de transport comprenant une pluralité de positions de support de légume, chaque position de support de légume comprend au moins une ouverture ;
- de retrait de l'au moins une partie du morceau de légume au moyen d'un mécanisme de retrait qui est agencé en dessous du mécanisme de transport,
**caractérisé en ce qu'**il comprend en outre les étapes suivantes :
- d'enregistrement, au moyen d'au moins un dispositif d'imagerie depuis le dessous du mécanisme de transport, d'au moins une ouverture d'au moins une position de la pluralité de positions de support de légume, où l'au moins une ouverture à enregistrer par l'au moins un dispositif d'imagerie est en amont du mécanisme de retrait vu dans la direction de transport ;
- d'utilisation d'au moins un dispositif d'affichage communiquant avec l'au moins un dispositif d'imagerie et affichant l'au moins une ouverture de l'au moins une position de la pluralité de positions de support de légume, où, au moyen du dispositif d'affichage, l'au moins une partie à retirer du morceau de légume est alignée par rapport à l'ouverture pour une opération de retrait ultérieure au moyen du mécanisme de retrait.

12. Procédé selon la revendication 11, dans lequel l'au moins une partie à retirer du morceau de légume est alignée par rapport au centre de l'ouverture de la position de support de légume.

13. Procédé selon la revendication 11 ou 12, dans lequel, au moyen du dispositif d'affichage, un opérateur est capable d'aligner manuellement l'au moins une partie à retirer du morceau de légume par rapport à l'ouverture, de sorte que, lors d'une opération de retrait ultérieure, la partie alignée puisse être retirée au moyen du mécanisme de retrait.

14. Procédé selon la revendication 11, 12 ou 13, dans lequel une image miroir d'un enregistrement du dispositif d'imagerie est affichée sur le dispositif d'affichage.

15. Procédé selon l'une des revendications précédentes 11 à 15, dans lequel, pour divers types de morceaux de légumes, les réglages et/ou l'équipement pour retirer une partie du morceau de légume est/sont automatiquement adapté(s) au moyen d'une interface, par exemple par une sélection d'opérateur sur l'interface entre un premier type de morceau de légume, tel que par exemple la laitue iceberg, et un second type de morceau de légume, tel que par exemple le chou.
